# EUROPEAN PATENT SPECIFICATION

(11) **EP 3 629 750 B1**
(45) Date of publication and mention of the grant of the patent: **06.09.2023**
(21) Application number: 18714810.1
(22) Date of filing: 10.04.2018
(51) Int. Cl.: A23D 7/01, A23D 7/04, A23D 9/013, A23D 9/05

(54) **POROUS MICRONISED FAT POWDER, A PROCESS FOR PREPARING SUCH, AND A PROCESS OF USING SUCH**
PORÖSES MIKRONISIERTES FETTPULVER, VERFAHREN ZUR HERSTELLUNG DAVON UND VERFAHREN ZUR VERWENDUNG DAVON
POUDRE GRASSE MICRONISÉE POREUSE, SON PROCÉDÉ DE PRÉPARATION ET SON PROCÉDÉ D'UTILISATION

(30) Priority: 31.05.2017 EP 17173648
(43) Date of publication of application: 08.04.2020
(73) Proprietor: Upfield Europe B.V., 1083 HK Amsterdam (NL)
(72) Inventor: MEEUSE, Frederik Michiel, 3133 AT Vlaardingen (NL); JANSSEN, Johannes Jozef Marie, 3133 AT Vlaardingen (NL)
(74) Representative: EP&C
(86) International application number: PCT/EP2018/059129
(87) International publication number: WO 2018/219535

(56) References cited:
- EP-A1- 1 651 338
- EP-A2- 1 865 786
- WO-A1-2012/041682
- WO-A1-2014/005797
- WO-A1-2016/058782
- MUNUKLU ET AL: "Particle formation of edible fats using the supercritical melt micronization process (ScMM)", THE JOURNAL OF SUPERCRITICAL FLUIDS, ELSEVIER, AMSTERDAM, NL, vol. 43, no. 1, 14 September 2007 (2007-09-14), pages 181-190, XP022245382, ISSN: 0896-8446, DOI: 10.1016/J.SUPFLU.2007.07.002

## Description

### Field of the Invention

The present invention relates to porous micronized fat powder, a process for making such porous micronized fat powder, a process for mixing such porous micronized fat powder with an oil to make a fat slurry and a process for making an emulsion by mixing such fat slurry with an aqueous phase. More in particular, in the above the porous micronized fat powder comprises a structuring fat and lecithin.

### Background of the invention

Fat continuous food products are well known in the art and include for example shortenings comprising a fat phase and water in oil spreads like margarine comprising a fat phase and an aqueous phase.

The fat phase of margarine and similar edible fat continuous spreads is often a mixture of liquid oil (i.e. fat that is liquid at ambient temperature) and fat which is solid at ambient temperatures. The solid fat, also called structuring fat or hardstock fat, serves to structure the fat phase (being the case in for example a shortening as well as in a water in oil emulsion) and helps to stabilize the aqueous phase, if present, by forming a fat crystal network. For a margarine or spread, ideally the structuring fat has such properties that it melts or dissolves at mouth temperature. Otherwise the product may have a heavy and/or waxy mouthfeel.

Important aspects of a fat continuous spread like for example margarine and low fat spread, the low fat spread usually comprising up to 45 wt% fat on total composition, are for example hardness, spreadability and ability to withstand temperature cycling. Temperature cycling means that the product is subjected to low and high temperatures (e.g. when the consumer takes the product out of the refrigerator and leaves it for some time at the table prior to use). This may have a negative influence on the structure of the spread (like for example destabilization of the emulsion or oil-exudation).

Generally edible fat continuous food products like shortenings and margarines and similar edible fat continuous spreads are prepared according to prior art processes that encompass the following steps:
1. Mixing of the liquid oil, the structuring fat and if present the aqueous phase at a temperature at which the structuring fat is definitely liquid;
2. cooling of the mixture under high shear to induce crystallization of the structuring fat to create an emulsion;
3. formation of a fat crystal network to stabilize the resulting emulsion and give the product some degree of firmness;
4. modification of the crystal network to produce the desired firmness, confer plasticity and reduce the water droplet size.

These steps are usually conducted in a process that involves apparatus that allow heating, cooling and mechanical working of the ingredients, such as the churn process or the votator process. The churn process and the votator process are described in the Ullmans Encyclopedia, Fifth Edition, Volume A 16, pages 156-158.

A disadvantage of these processes is that the complete composition (including the liquid oil, structuring fat and if present the aqueous phase) is subjected to a heating step and a cooling step. This requires a lot of energy. For a spread comprising for example 6 wt% structuring fat the whole composition (100 wt%) has to be heated and cooled. Another disadvantage of the known processes is that the choice of fats that can practically be used as structuring agent is rather limited. If the melting point of the structuring agent is too high the melting properties in the mouth are unsatisfactory. If on the other hand, the melting point is too low, the emulsion stability will be negatively affected. Moreover the amount of saturated fatty acids. A further disadvantage of the known processes is that the product or ingredients may deteriorate due to the changes in temperature caused by the heating and cooling step.

Alternative processes have been described wherein the structuring fat is added as fat powder (i.e. crystallized fat) thereby eliminating the need to heat the whole composition to above the melting temperature of the structuring fat.

EP 1651338 discloses a process for the preparation of a spreadable edible dispersion wherein a mixture of oil and porous micronized fat powder (the porous micronized fat powder being made of structuring fat) is subjected to stirring to provide a fat slurry, followed by adding an aqueous phase is gradually added to the mixture until a dispersion is obtained. The porous micronized fat powder needed for such process have a microporous structure of submicron size particles and can be prepared using a micronisation process, such as described in said patent and in J. of Supercritical Fluids 43 (2007) 181-190, and which is known as the PGSS process (particles from gas-saturated solutions) or ScMM (supercritical melt micronisation) process. The porous micronized fat powder containing structuring fat in such process need to be mixed with oil to provide the slurry. During such mixing of the porous micronized fat powder the particles of the powder break down and/or dissolve in the oil, and the viscosity increases. Without wishing to be bound by theory, it is believed such increase of viscosity is the result of small fat crystals (smaller than the micronized fat particles as they are to some extent broken down) of the structuring fat being dispersed in the oil. Such dispersion is desired for its stabilizing effect on the emulsion when the aqueous phase is added. It is also believed that a higher viscosity of such dispersion is preferred over a lower viscosity. The build-up of viscosity takes time after combining porous micronized fat powder and oil and stirring, e.g. 2-60 minutes of stirring, dependent e.g. on the intensity of the stirring, the type of equipment, the amount of powder over the oil, the type of oil and the type of fat used for the fat powder. Clearly, from a process-efficiency point of view it is desired that the required mixing time is as short as possible. The relevance of quick viscosity build-up is further set out in WO2016/058782.

Therefore, there is a need for an improved mixing process of mixing liquid edible oil with a microporous (edible) fat powder, in which viscosity builds sufficiently fast, or in other words: that mixing to yield a desired viscosity is achieved in a limited amount of time.

Other prior art describes a process for making micronized fat particles that contain both lecithin and water. WO2016/058782, EP1651338 discloses processes wherein lecithin is added to an oil phase to provide a structuring fat. WO2014/005797 describes the addition of an emulsifier to a structuring fat

### Summary of the Invention

Hence, it is an object of the present invention to provide a process for mixing liquid (edible) oil with a porous micronized fat powder, said porous micronized fat powder comprising a substantial portion of structuring fat, and in which mixing process there is an increase of viscosity (viscosity after e.g. 2-60 minutes compared to the viscosity directly after combining oil and micronized fat powder).

It has been found that such objectives can be reached, at least in part, by new porous micronized fat powder (i.e. a powder of porous particles of which fat is the major component) and a process to make such.

Thus, the present invention relates to porous micronized fat powder characterised in that said porous micronized fat powder comprises 70-99.8 % by weight on said powder of a structuring fat and 0.2-10 % by weight on said powder of lecithin, and wherein said powder comprise less than 10% by weight on said powder of water.

The invention furthermore relates to a process of making such porous micronized fat powder. Hence, the invention further relates to a process for preparing porous micronized fat powder, wherein said porous micronized fat powder comprises 70-99.8 % by weight on said powder of a structuring fat and 0.2-10 % by weight on said powder of lecithin, wherein said porous micronized fat powder comprises less than 10% by weight on said powder of water, which process comprises the steps of:
a) providing a mixture of said structuring fat with said lecithin at a temperature above the melting point of the structuring fat and below 80°C,
b) pressurising said mixture of structuring fat and lecithin with a gas comprising from 50-100% of CO₂ under a pressure of 100 - 270 bar,
c) spraying said pressurised mixture of structuring fat and lecithin through a nozzle in a space having a pressure of 0 - 10 bar and a temperature of below 30°C.

### Detailed description of the invention

The porous micronized fat powder herein relates to a fat-based powder of which the particles have a microporous structure of submicron size and which can be prepared using a micronisation process, such as described in EP 1651338 and in J. of Supercritical Fluids 43 (2007) 181-190, and which is known as the PGSS process (particles from gas-saturated solutions) or ScMM (supercritical melt micronisation) process. In the referred patent in paragraph 21 it is explained that "a microporous structure with submicron particle sizes" relates to particles which consist of platelets with submicron dimensions. The thickness of the platelets should be submicron, preferably the thickness is on average 0.01-0.5 µm, more preferably 0.03-0.2 µm, even more preferably 0.06-0.12 µm. This thickness of the platelets can be measured with SAXS. "Fat-based" in this connection means comprising at least 70% by weight of a triglyceride fat.

As the porous micronized fat powder of the present invention can be beneficially used in the making of edible emulsions such as spreads and margarines, and as such spreads and margarines require a structuring fat, it is preferred that the porous micronized fat powder according to the present invention comprises 90-99.8 % by weight on said fat powder of a structuring fat. The structuring fat (also known as hardstock fat) serves to structure the fat phase and helps to stabilize the aqueous phase (e.g. in the form of droplets) by forming a fat crystal network. Ideally the structuring fat has such properties that it melts or dissolves at mouth temperature otherwise the product may have a heavy and/or waxy mouthfeel. Structuring fat is edible fat, predominantly of fatty acid triglyceride ester composition, which has a melting point such that it is predominantly solid at e.g. 5°C and that it is for a large proportion liquid at 37°C. Such structuring fats preferably have a solid fat content N10 from 50 to 100, N20 from 26 to 95, and N35 from 5 to 60. This enables it to give structure and stability to the emulsion yet it allows the emulsion to break down in the mouth, thereby providing the desired mouthfeel and other properties. Compositionally, such structuring fats are often harder fractions of natural fats, fully hardened oils, and (interesterified) blends thereof and with vegetable oils. A preferred structuring fat is an interesterified fat blend of a mixture of 30-90% palm oil stearin and 10-70% palm kernel oil.

For e.g. convenience of processing, it is preferred that the porous micronized fat powder comprises little or preferably no water. Hence, it is preferred that the porous micronized fat powder according to the present invention comprise less than 5%, more preferably less than 2%, most preferably less than 1% by weight on the porous micronized fat powder of water. Preferably the powder is water-free.

In the present invention the lecithin in the porous micronized fat powder can be any lecithin as used in foods. Preferably the lecithin is from soy, sunflower or rapeseed origin. The amount of lecithin has an optimum in terms of quality (e.g. mouthfeel) of the spreads and margarines that are produced with such powder. Following this, the porous micronized fat powder according to the present invention comprises comprise 0.5 to 5% by weight on said powder of lecithin, more preferably 1 to 5%.

As already mentioned, the invention also relates to a process to make the porous micronized fat powder: a process for preparing porous micronized fat powder, wherein said porous micronized fat powder comprises 70-99.8 % by weight on said powder of a structuring fat and 0.2-10 % by weight on said powder of lecithin, wherein said porous micronized fat powder comprises less than 10% by weight on said powder of water, which process comprises the steps of:
a. providing a mixture of structuring fat with lecithin at a temperature above the melting point of the structuring fat and below 80°C,
b. pressurising said mixture of structuring fat and lecithin with a gas comprising from 50-100% of CO₂ under a pressure of 100 - 270 bar,
c. spraying said pressurised mixture of structuring fat and lecithin through a nozzle in a space having a pressure of 0 - 10 bar and a temperature of below 30°C.

In the above process, in order to get good quality powder, it is preferred that the temperature of the structuring fat with lecithin in step a) is between 30 and 75°C, preferably between 35 and 60°C.For the same reason (e.g. to get the right amount of CO₂ dissolved in the powder, it is preferred that in the above process the pressure in step b) is between 150 and 250 bar. For good quality powder it is preferred that in the above process the amount of CO₂ dissolved in the structuring fat with lecithin due to pressurising in step b) is from 25 to 50 % by weight.

In order to use the porous micronized fat powder in the manufacture of an edible emulsion like a spread or margarine, it is preferred that such powder is first mixed with oil to provide a slurry, which slurry can be mixed with an aqueous phase. Hence, the present invention further relates to a process
for preparing a fat slurry, said process comprising the steps of:
a) providing porous micronized fat powder according to any of claims 1 to 6;
b) providing edible oil;
c) combining said fat powder and the oil in a mixing vessel and reducing the pressure in the mixing vessel to below 200 mbar;
d) mixing for 2 to 60 minutes 70-97% by weight of the oil and 3-30% by weight of the porous micronized fat powder in the mixing vessel to a fat slurry.

In the above process, it is preferred, for a good quality slurry (and following that a good quality emulsion) that the mixing in step d) in the above process is continued until the viscosity of the content in the mixing vessel has reached a viscosity of at least 0.5 Pa.s, preferably at least 0.8 Pa.s, more preferably at least 1 Pa.s.

Likewise, in this process it is preferred that the pressure during step c) is reduced to below 150 mbar, more preferably below 100 mbar.

The process of how a fat slurry, prepared with the porous micronized fat powder according to the present invention, can be turned into an emulsion such as a spread or margarine is basically as described in EP 1651338 and successive patent applications on stabilised emulsions using porous micronized fat powder made by supercritical melt micronisation. Hence, the present invention further relates to a process for making an edible oil-continuous emulsion comprising 15-80% (by weight on the total emulsion) of a fat phase and 20-85% (by weight on the total emulsion) of an aqueous phase, which process comprises the steps of:
- providing the aqueous phase at a temperature below 35°C,
- providing a fat slurry of oil and porous micronized fat powder,
- mixing said aqueous phase and said fat slurry to obtain an oil-continuous emulsion,
wherein said fat slurry is obtained by the process comprising the steps as set out herein before.

### EXAMPLES

### Examples 1, 2

Two types of porous micronized fat powder was made consisting of 95% erES 48 and 5% lecithin (two different lecithins). The powders were made with the process known as supercritical melt micronisation. More specifically, the porous micronized fat powder was made according to the general method described in EP1651338 B1 and made in this case by directly spraying in a storage vessel capable of achieving at least partial vacuum, via a nozzle connected to said vessel. The melted structuring fat had 47 wt. % of dissolved CO₂ and was fed to the nozzle at a pressure of 180 bar. In example 1 the lecithin source was Bolec ZT, in example 2 the lecithin source was Cetinol. The structuring fat erES48 is an enzymatically interesterified fat blend of a mixture of 65% dry fractionated palm oil stearin with an Iodine Value of 14 and 35% palm kernel oil.

Fat slurries were made by mixing 12% of the porous micronized fat powder under vacuum with 88% sunflower oil. The slurry was mixed for 45 minutes. Samples were taken after 5, 10, 15, 30 and 45 minutes and the viscosity was measured.

### Comparative examples A, B

Porous micronized fat powder of 100% erES 48 was made. The powder was made in the same way as described in examples 1 and 2. Fat slurries were made in the same way as in examples 1 and 2 with the overall composition as given in Table 1. Hence, there is lecithin in the slurry but not in the fat powder.

**Table 1: slurry composition, in wt% on slurry**

| | A | B |
|---|---|---|
| Sunflower oil | 87,4% | 87,4% |
| erES48 | 12% | 12% |
| lecithin | 0.6% Bolec ZT | 0.6% Cetinol |

### Results

Table 2 shows the viscosity of the fat slurries.

The viscosity was determined with a Haake viscotester 2 plus with R1 spindle (Rotor No. 1). The flow resistance of the dispersion (i.e. of the fat powder and oil slurry) is displayed while the spindle rotates at 62.5 rpm. The spindle was inserted in the dispersion so that the fluid level reached the immersion groove on the shaft of the spindle. Next, the spindle was attached to the viscometer. The viscosity was measured of the dispersion phase having a temperature of 20-24 degrees Celsius by setting the Haake viscosimeter 2 to program R1. The viscosity was measured in Pa.s.

**Table 2: viscosity of the slurry of examples 1, 2 and comparatives A and B**

| Slurry mixing time | Example 1 | Example 2 | A (comp.) | B (comp.) |
|---|---|---|---|---|
| 5 min | 1,3 Pa s | 1,6 Pa s | 0,74 Pa s | 0,56 Pa s |
| 10 min | 2,0 Pa s | 2,3 Pa s | 1,5 Pas | 1,1 Pa s |
| 15 min | 2,3 Pa s | 2,3 Pa s | 1,8 Pa s | 1,5 Pa s |
| 30 min | 2,3 Pa s | 2,4 Pa s | 1,7 Pas | 1,7 Pa s |
| 45 min | 2,4 Pa s | 2,5 Pa s | 1,7 Pa s | 1,9 Pa s |

### Comparative example C, examples 3, 4

Two types of porous micronized fat powder with the compositions given in Table 3 were made with the process as known as supercritical melt micronisation. More specifically, the porous micronized fat powder was made according to the general method described in EP1651338 B1 and made in this case by directly spraying in a vessel capable of achieving at least partial vacuum, via a nozzle connected to said vessel. The melted structuring fat had 47 wt. % of dissolved CO₂ and was fed to the nozzle at a pressure of 250 bar. The lecithin in this example was Solec sunflower lecithin.

**Table 3: composition of porous fat powder, in wt% on total fat powder**

| | Comparative example C | Example 3 | Example 4 |
|---|---|---|---|
| erES 48 | 100 | 97.5 | 95.7 |
| lecithin | 0 | 2.15 | 4.3 |

### Examples 5, 6, comparative D.

A slurry of fat crystals in oil, with the overall composition as given in Table 4 (the fat powder and the fat phase of table 4 combined), was prepared in the following way. The soy bean oil and palm kernel oil were dosed to a mixing tank with recirculation loop. Then the lecithin was added (only example 3). The tank was put under mild vacuum (< 100 mbar). Whilst the oil was recirculated, the porous micronized fat powder was sucked in through a funnel mounted in the recirculation loop and dispersed. Air is continuously removed to keep the pressure low. Recirculation is continued for approximately 15 minutes. Temperature is kept below 20° C by flowing 15° C water through the double wall.

Spreads were made out of these slurries of the slurries so prepared by adding the slurry and the aqueous phase (composition in table 4) containing the remaining ingredients together just before a C-unit which was operated at four different speeds. The resulting products were packed in 250 g tubs.

**Table 4: composition of spreads, in wt% on the total formulation**

| | | Comparative example D | Example 5 | Example 6 |
|---|---|---|---|---|
| Fat powder | erES48 | 4.9 | 4.9 | 4.9 |
| | Lecithin | 0 | 0.11 | 0.22 |
| Fat phase | Soy bean oil | 35.3 | 35.3 | 35.3 |
| | Palm kernel oil | 4.5 | 4.5 | 4.5 |
| | lecithin | 0.22 | 0.11 | 0 |
| Water phase | water | 53.35 | 53.35 | 53.35 |
| | Salt | 1.65 | 1.65 | 1.65 |
| | Citric acid | | | |
| total | | 100 | 100 | 100 |

| | | | | |
|---|---|---|---|---|
| Note: apart from any compositional differences between the examples, there are some processing differences. Examples 1 and 2 are made on small-scale equipment, with which it is easy to take samples during slurry-making, for the benefit of viscosity measurements. On these small-scale it is difficult to make representative spreads, and hence this has not been done. Examples 3-6 have been make on equipment that allows production on a bigger scale than for examples 1 and 2. On this equipment, however, it is not possible to take samples during slurry making for the benefit of viscosity measurements. This is the reason why there are no measurements of the viscosity of the slurry over time for examples 3-6. However, such larger scale production allows to make spreads out of the slurries. | | | | |

## Claims

1. Porous micronized fat powder **characterised in that** said porous micronized fat powder comprises 70-99.8 % by weight on said powder of a structuring fat and 0.2-10 % by weight on said powder of lecithin, and wherein said powder comprise less than 10% by weight on said powder of water.

2. Porous micronized fat powder according to claim 1, which comprise 90-99.8 % by weight on said fat powder of a structuring fat.

3. Porous micronized fat powder according to claim 1 or 2, which comprise less than 5%, more preferably less than 2%, most preferably less than 1% by weight on the porous micronized fat powder of water.

4. Porous micronized fat powder according to any of claims 1 to 3, wherein said lecithin is from soy, sunflower or rapeseed origin.

5. Porous micronized fat powder according to any of claims 1 to 4, wherein said powder comprise 0.5 to 5% by weight on said powder of lecithin.

6. Porous micronized fat powder according to any of claims 1 to 5, wherein the structuring fat has a solid fat content N10 from 50 to 100, N20 from 26 to 95, and N35 from 5 to 60.

7. Process for preparing porous micronized fat powder, wherein said porous micronized fat powder comprises 70-99.8 % by weight on said powder of a structuring fat and 0.2-10 % by weight on said powder of lecithin, wherein said porous micronized fat powder comprises less than 10% by weight on said powder of water, which process comprises the steps of:
a) providing a mixture of structuring fat with lecithin at a temperature above the melting point of the structuring fat and below 80°C,
b) pressurising said mixture of structuring fat and lecithin with a gas comprising from 50-100% of CO₂ under a pressure of 100 - 270 bar,
c) spraying said pressurised mixture of structuring fat and lecithin through a nozzle in a space having a pressure of 0 - 10 bar and a temperature of below 30°C.

8. Process according to claim 7, wherein the temperature of the structuring fat with lecithin in step a) is between 30 and 75°C, preferably between 35 and 60°C.

9. Process according to claim 7 or 8, wherein the pressure in step b) is between 150 and 250 bar.

10. Process according to any of claims 7 to 9, wherein the amount of CO₂ dissolved in the structuring fat with lecithin due to pressurising in step b) is from 25 to 50 % by weight.

11. Process for preparing a fat slurry, said process comprising the steps of:
a) providing porous micronized fat powder according to any of claims 1 to 6;
b) providing edible oil;
c) combining said fat powder and the oil in a mixing vessel and reducing the pressure in the mixing vessel to below 200 mbar;
d) mixing for 2 to 60 minutes 70-97% by weight of the oil and 3-30% by weight of the porous micronized fat powder in the mixing vessel to a fat slurry.

12. Process according to claim 11, wherein the pressure during step c) is reduced to below 150 mbar, more preferably below 100 mbar.

13. Process for making an edible oil-continuous emulsion comprising 15-80% (by weight on the total emulsion) of a fat phase and 20-85% (by weight on the total emulsion) of an aqueous phase, which process comprises the steps of:
- providing the aqueous phase at a temperature below 35°C,
- providing a fat slurry of oil and porous micronized fat powder,
- mixing said aqueous phase and said fat slurry to obtain an oil-continuous emulsion,
wherein said fat slurry is obtained by the process comprising the steps according to any of claims 11 to 12.

## Patentansprüche

1. Poröses mikronisiertes Fettpulver, **dadurch gekennzeichnet, dass** das poröse mikronisierte Fettpulver bezogen auf das Pulver zu 70 bis 99,8 Gew.-% ein strukturgebendes Fett und bezogen auf das Pulver 0,2 bis 10 Gew.-% Lecithin umfasst und wobei das Pulver bezogen auf das Pulver weniger als 10 Gew.-% Wasser umfasst.

2. Poröses mikronisiertes Fettpulver nach Anspruch 1, das bezogen auf das Fettpulver zu 90 bis 99,8 Gew.-% ein strukturgebendes Fett umfasst.

3. Poröses mikronisiertes Fettpulver nach Anspruch 1 oder 2, das bezogen auf das poröse mikronisierte Fettpulver weniger als 5 Gew.-%, stärker bevorzugt weniger als 2 Gew.-%, am stärksten bevorzugt weniger als 1 Gew.-% Wasser umfasst.

4. Poröses mikronisiertes Fettpulver nach einem der Ansprüche 1 bis 3, wobei das Lecithin aus Soja, Sonnenblumen oder Raps gewonnen wird.

5. Poröses mikronisiertes Fettpulver nach einem der Ansprüche 1 bis 4, wobei das Pulver bezogen auf das Pulver 0,5 bis 5 Gew.-% Lecithin umfasst.

6. Poröses mikronisiertes Fettpulver nach einem der Ansprüche 1 bis 5, wobei das strukturgebende Fett einen Festfettgehalt N10 von 50 bis 100, N20 von 26 bis 95 und N35 von 5 bis 60 aufweist.

7. Verfahren zur Herstellung von porösem mikronisierten Fettpulver, wobei das poröse mikronisierte Fettpulver bezogen auf das Pulver zu 70 bis 99,8 Gew.-% ein strukturgebendes Fett und bezogen auf das Pulver 0,2 bis 10 Gew.-% Lecithin umfasst, wobei das poröse mikronisierte Fettpulver bezogen auf das Pulver weniger als 10 Gew.-% Wasser umfasst, wobei das Verfahren die folgenden Schritte umfasst:
a) Bereitstellen eines Gemisches aus strukturgebendem Fett mit Lecithin bei einer Temperatur oberhalb des Schmelzpunktes des strukturgebenden Fettes und von unter 80 °C,
b) Druckbeaufschlagung des Gemisches aus strukturgebendem Fett und Lecithin mit einem 50 bis 100 % CO₂ umfassenden Gas unter einem Druck von 100 bis 270 bar,
c) Sprühen des unter Druck stehenden Gemisches aus strukturgebendem Fett und Lecithin durch eine Düse in einem Raum, in dem ein Druck von 0 bis 10 bar herrscht und eine Temperatur von unter 30 °C vorliegt.

8. Verfahren nach Anspruch 7, wobei die Temperatur des strukturgebenden Fettes mit Lecithin in Schritt a) zwischen 30 und 75 °C, vorzugsweise zwischen 35 und 60 °C, liegt.

9. Verfahren nach Anspruch 7 oder 8, wobei der Druck in Schritt b) zwischen 150 und 250 bar liegt.

10. Verfahren nach einem der Ansprüche 7 bis 9, wobei die Menge an CO₂, die durch die Druckbeaufschlagung in Schritt b) in dem strukturgebenden Fett mit Lecithin gelöst wird, 25 bis 50 Gew.-% beträgt.

11. Verfahren zur Herstellung einer Fettaufschlämmung, wobei das Verfahren die folgenden Schritte umfasst:
a) Bereitstellen von porösem mikronisierten Fettpulver nach einem der Ansprüche 1 bis 6;
b) Bereitstellen von Speiseöl;
c) Vermischen des Fettpulvers und des Öls in einem Mischbehälter und Reduzieren des Drucks im Mischbehälter auf unter 200 mbar;
d) Mischen von 70 bis 97 Gew.-% Öl und 3 bis 30 Gew.-% porösem mikronisierten Fettpulver 2 bis 60 Minuten lang zu einer Fettaufschlämmung in dem Mischbehälter.

12. Verfahren nach Anspruch 11, wobei der Druck in Schritt c) auf unter 150 mbar, stärker bevorzugt unter 100 mbar, reduziert wird.

13. Verfahren zur Herstellung einer Emulsion mit Speiseöl als kontinuierlicher Phase, die (bezogen auf die Gesamtemulsion) zu 15 bis 80 Gew.-% eine Fettphase und (bezogen auf die Gesamtemulsion) zu 20 bis 85 Gew.-% eine wässrige Phase umfasst, wobei das Verfahren die folgenden Schritte umfasst:
- Bereitstellen der wässrigen Phase bei einer Temperatur von unter 35 °C,
- Bereitstellen einer Fettaufschlämmung aus Öl und porösem mikronisierten Fettpulver,
- Mischen der wässrigen Phase und der Fettaufschlämmung, sodass eine Emulsion mit Öl als kontinuierlicher Phase erhalten wird, wobei die Fettaufschlämmung durch das die Schritte nach einem der Ansprüche 11 bis 12 umfassende Verfahren erhalten wird.

## Revendications

1. Poudre grasse micronisée poreuse **caractérisée en ce que** ladite poudre grasse micronisée poreuse comprend de 70 à 99,8 % en poids d'une graisse structurante par rapport à ladite poudre et de 0,2 à 10 % en poids de lécithine par rapport à ladite poudre, et dans laquelle ladite poudre comprend moins de 10 % en poids d'eau par rapport à ladite poudre.

2. Poudre grasse micronisée poreuse selon la revendication 1, qui comprend de 90 à 99,8 % en poids d'une graisse structurante par rapport à ladite poudre grasse.

3. Poudre grasse micronisée poreuse selon la revendication 1 ou 2, qui comprend moins de 5 %, de préférence moins de 2 %, de manière davantage préférée moins de 1 % en poids d'eau par rapport à la poudre grasse micronisée poreuse.

4. Poudre grasse micronisée poreuse selon l'une quelconque des revendications 1 à 3, dans laquelle ladite lécithine provient de soja, de tournesol ou de colza.

5. Poudre grasse micronisée poreuse selon l'une quelconque des revendications 1 à 4, dans laquelle ladite poudre comprend de 0,5 à 5 % en poids de lécithine par rapport à ladite poudre.

6. Poudre grasse micronisée poreuse selon l'une quelconque des revendications 1 à 5, dans laquelle la graisse structurante a une teneur en graisse solide N10 de 50 à 100, N20 de 26 à 95, et N35 de 5 à 60.

7. Procédé de préparation de poudre grasse micronisée poreuse, dans lequel ladite poudre grasse micronisée poreuse comprend de 70 à 99,8 % en poids d'une graisse structurante par rapport à ladite poudre et de 0,2 à 10 % en poids de lécithine par rapport à ladite poudre, dans lequel ladite poudre grasse micronisée poreuse comprend moins de 10 % en poids d'eau par rapport à ladite poudre, lequel procédé comprend les étapes de :
a) fourniture d'un mélange de graisse structurante avec de la lécithine à une température supérieure au point de fusion de la graisse structurante et inférieure à 80 °C,
b) mise sous pression dudit mélange de graisse structurante et de lécithine avec un gaz comprenant de 5 à 100 % de CO₂ sous une pression de 100 à 270 bars,
c) pulvérisation dudit mélange sous pression de graisse structurante et de lécithine à travers une buse dans un espace ayant une pression de 0 à 10 bars et une température inférieure à 30 °C.

8. Procédé selon la revendication 7, dans lequel la température de la graisse structurante avec la lécithine à l'étape a) est entre 30 et 75 °C, de préférence entre 35 et 60 °C.

9. Procédé selon la revendication 7 ou 8, dans lequel la pression à l'étape b) est entre 150 et 250 bars.

10. Procédé selon l'une quelconque des revendications 7 à 9, dans lequel la quantité de CO₂ dissoute dans la graisse structurante avec la lécithine en raison de la mise sous pression à l'étape b) est de 25 à 50 % en poids.

11. Procédé de préparation d'une suspension de graisse, ledit procédé comprenant les étapes de :
a) fourniture d'une poudre grasse micronisée poreuse selon l'une quelconque des revendications 1 à 6 ;
b) fourniture d'une huile comestible ;
c) combinaison de ladite poudre grasse et de l'huile dans une cuve de mélange et réduction de la pression dans la cuve de mélange à moins de 200 mbars ;
d) mélange pendant 2 à 60 minutes de 70 à 97 % en poids de l'huile et de 3 à 30 % en poids de la poudre grasse micronisée poreuse dans la cuve de mélange jusqu'à obtenir une suspension de graisse.

12. Procédé selon la revendication 11, dans lequel la pression durant l'étape c) est réduite à moins de 150 mbars, de préférence à moins de 100 mbars.

13. Procédé de préparation d'une émulsion en phase huileuse continue comestible comprenant de 15 à 80 % (en poids par rapport à l'émulsion totale) d'une phase grasse et de 20 à 85 % (en poids par rapport à l'émulsion totale) d'une phase aqueuse, lequel procédé comprend les étapes de :
- fourniture de la phase aqueuse à une température inférieure à 35 °C,
- fourniture d'une suspension grasse d'huile et de poudre grasse micronisée poreuse,
- mélange de ladite phase aqueuse et de ladite suspension grasse pour obtenir une émulsion en phase continue huileuse,
dans laquelle ladite suspension grasse est obtenue par le procédé comprenant les étapes selon l'une quelconque des revendications 11 à 12.
